# EUROPÄISCHE PATENTSCHRIFT

(11) **EP 3 710 198 B1**
(45) Veröffentlichungstag und Bekanntmachung des Hinweises auf die Patenterteilung: **02.10.2024**
(21) Anmeldenummer: 18815989.1
(22) Anmeldetag: 04.12.2018
(51) Int. Cl.: B23Q 1/44

(54) **BEARBEITUNGSVORRICHTUNG**
MACHINING DEVICE
ARRANGEMENT D'USINAGE

(30) Priorität: 15.01.2018 DE 102018200551
(43) Veröffentlichungstag der Anmeldung: 23.09.2020
(73) Patentinhaber: Festool GmbH, 73240 Wendlingen am Neckar (DE)
(72) Erfinder: DAGEFÖRDE, Jonas, 24107 Ottendorf (DE)
(74) Vertreter: Patentanwälte Magenbauer & Kollegen Partnerschaft mbB
(86) Internationale Anmeldenummer: PCT/EP2018/083520
(87) Internationale Veröffentlichungsnummer: WO 2019/137695

(56) Entgegenhaltungen:
- WO-A1-2015/087411
- DE-A1- 2 854 856
- JP-A- H07 128 467
- US-A1- 2010 175 490

## Beschreibung

Die Erfindung betrifft eine Bearbeitungsvorrichtung mit einem Bearbeitungskopf, der eine als Werkzeug und/oder Auftrage-Einheit, insbesondere Druckereinheit, ausgebildete Bearbeitungseinheit umfasst. Die Bearbeitungsvorrichtung verfügt über eine erste Positioniereinrichtung zur Bewegung des Bearbeitungskopfs, um die Bearbeitungseinheit mit einer ersten Genauigkeit an einer vorgegebenen Bearbeitungsposition zu positionieren.

Als Bearbeitungsvorrichtungen kommen konventionell insbesondere CNC-Maschinen zum Einsatz, die über eine Positioniereinrichtung mit mehreren Maschinenachsen verfügen, um eine Bearbeitungseinheit, insbesondere ein Werkzeug, an einer vorgegebene Bearbeitungsposition zu positionieren. Die Genauigkeit, mit der die Bearbeitungseinheit positioniert werden kann, hängt dabei von der Genauigkeit der Positioniereinrichtung ab. Die Genauigkeit beim Positionieren wird nachstehend auch als Positioniergenauigkeit bezeichnet.

Zudem hängt von der Positioniereinrichtung - insbesondere von der maximalen Auslenkung der Maschinenachsen der Positioniereinrichtung - die Größe des Bearbeitungsbereichs der Bearbeitungsvorrichtung ab, also derjenige Positionierbereich, in dem die Bearbeitungseinheit zur Bearbeitung positioniert werden kann.

In der Regel besteht sowohl das Bedürfnis, die Bearbeitungseinheit mit einer möglichst hohen Genauigkeit positionieren zu können, als auch das Bedürfnis, einen möglichst großen Bearbeitungsbereich zur Verfügung zu haben, in dem die Bearbeitungseinheit zur Bearbeitung positioniert werden kann. Allerdings wird es mit größer werdendem Positionierbereich der Positioniereinrichtung immer schwieriger, noch eine hohe Genauigkeit zu gewährleisten.

Die WO 2015/087411 A1 betrifft eine Bearbeitungsvorrichtung mit einem Werkzeug zum Bearbeiten einer Oberfläche eines Werkstücks (51), einer ersten Linearbewegungsmechanismuseinheit, die das Werkzeug in der ersten Richtung entlang der Oberfläche des Werkstücks bewegt, einer zweiten Linearbewegungsmechanismuseinheit, die das Werkzeug in der zweiten Richtung orthogonal zu der ersten Richtung bewegt, so dass sich ein Abstand zwischen einem vorderen Ende des Werkzeugs und der Oberfläche des Werkstücks ändert, eine Abstandsmesseinheit zum Bestimmen des Abstands zwischen dem vorderen Ende des Werkzeugs und der Oberfläche des Werkstücks, und eine Bewegungsmechanismuseinheit, an der das Werkzeug und die Abstandsmesseinheit angebracht sind, und die das Werkzeug und die Abstandsmesseinheit abwechselnd zu einer bestimmten Position auf einer Werkstückoberfläche bewegt.

Eine Aufgabe der Erfindung besteht darin, eine Bearbeitungsvorrichtung bereitzustellen, bei der möglichst unabhängig von der Größe des Positionierbereichs der Positioniereinrichtung eine hohe Positioniergenauigkeit erzielt werden kann.

Die Aufgabe wird gelöst durch die im Anspruch 1 angegebenen Merkmale. Der Bearbeitungskopf der eingangs genannten Bearbeitungsvorrichtung verfügt über eine zweite Positioniereinrichtung und die Bearbeitungsvorrichtung ist ausgebildet, unter Verwendung der zweiten Positioniereinrichtung die Bearbeitungseinheit mit einer zweiten Genauigkeit an der vorgegebenen Bearbeitungsposition zu positionieren. Die zweite Genauigkeit ist dabei höher als die erste Genauigkeit, so dass durch die Positionierung mit der zweiten Positioniereinrichtung die geringere Genauigkeit der ersten Positioniereinrichtung kompensiert wird. Erfindungsgemäß ist der Bearbeitungskopf als manuell handhabbares Bearbeitungsgerät ausgebildet, so dass der Bearbeitungskopf in einem von der ersten Positioniereinrichtung abgenommenen Zustand manuell an der vorgegebenen Bearbeitungsposition positioniert werden kann und der Bearbeitungskopf ausgebildet ist, unter Verwendung der zweiten Positioniereinrichtung die Bearbeitungseinheit mit der zweiten Genauigkeit an der vorgegebenen Bearbeitungsposition zu positionieren, so dass durch die Positionierung mit der zweiten Positioniereinrichtung eine geringere Genauigkeit der manuellen Positionierung kompensiert wird.

Dadurch, dass die zweite Positioniereinrichtung die geringere Genauigkeit der ersten Positioniereinrichtung kompensiert, wird die Positioniergenauigkeit der Bearbeitungsvorrichtung nun primär durch die zweite Positioniereinrichtung gewährleistet. Die erste Positioniereinrichtung kann dementsprechend für eine geringere Genauigkeit - und damit auch ohne Schwierigkeiten für einen größeren Positionierbereich - ausgelegt werden, ohne dass dadurch die Positioniergenauigkeit der Bearbeitungsvorrichtung insgesamt beeinträchtigt wird.

Die zweite Positioniereinrichtung benötigt selbst wiederum keinen großen Positionierbereich, da sie als Teil des mit der ersten Positioniereinrichtung positionierbaren Bearbeitungskopfs mit diesem mit bewegt bzw. positioniert wird und somit den Positionierbereich der ersten Positioniereinrichtung effektiv mit nutzt. Der Positionierbereich der zweiten Positioniereinrichtung muss letztendlich nur so groß sein, dass die maximal mögliche, aus der geringen Genauigkeit der ersten Positioniereinrichtung resultierende Abweichung zwischen der Bearbeitungseinheit und der vorgegebenen Bearbeitungsposition ausgeglichen bzw. kompensiert werden kann. Da die zweite Positioniereinrichtung nur einen relativ kleinen Positionierbereich bereitstellen muss, kann die zweite Positioniereinrichtung ohne Weiteres mit einer hohen Positioniergenauigkeit realisiert werden.

Durch die erfindungsgemäße Kombination der ersten Positioniereinrichtung und der zweiten Positioniereinrichtung wird somit der Vorteil erzielt, dass die Bearbeitungsvorrichtung insgesamt eine hohe Positioniergenauigkeit aufweisen kann, selbst dann, wenn die erste Positioniereinrichtung aufgrund eines großen bereitzustellenden Positionierbereichs eine geringere Positioniergenauigkeit aufweist.

Der Unterschied in der Positioniergenauigkeit zwischen der ersten Positioniereinrichtung und der zweiten Positioniereinrichtung kann sich beispielsweise daraus ergeben, dass die Positioniereinrichtungen, insbesondere die Maschinenachsen der Positioniereinrichtungen, unterschiedliche Steifigkeiten gegenüber Reaktionskräften aufweisen und/oder unterschiedliche Bewegungspräzisionen bei der Ansteuerung der Positioniereinrichtungen gegeben sind. Ferner ist es auch möglich, dass der Genauigkeitsunterschied darin begründet ist, dass die erste Positioniereinrichtung im Rahmen einer reinen Steuerung betrieben wird, während die zweite Positioniereinrichtung im Rahmen einer Regelung betrieben wird.

Der Begriff "Genauigkeit" bzw. "Positionsgenauigkeit" soll sich insbesondere auf eine (statistische) mittlere Abweichung und/oder eine maximale Abweichung zwischen der Position der Bearbeitungseinheit und der vorgegebenen Bearbeitungsposition beziehen. Mit einer größeren Genauigkeit ist dabei eine geringere Abweichung und mit einer geringeren Genauigkeit eine größere Abweichung gemeint.

Vorteilhafte Weiterbildungen sind Gegenstand der Unteransprüche.

Weitere Details sowie exemplarische Ausführungsformen werden nachstehend unter Bezugnahme auf die Zeichnung erläutert. Dabei zeigt
- Figur 1: eine schematische Darstellung einer Bearbeitungsvorrichtung gemäß einer ersten Ausführungsform in einer Seitenansicht,
- Figur 2: eine schematische Darstellung der Bearbeitungsvorrichtung gemäß der ersten Ausführungsform in einer Draufsicht,
- Figur 3: eine schematische Darstellung einer Bearbeitungsvorrichtung gemäß einer zweiten Ausführungsform in einer Seitenansicht,
- Figur 4: eine schematische Darstellung der Bearbeitungsvorrichtung gemäß der zweiten Ausführungsform in einer Draufsicht,

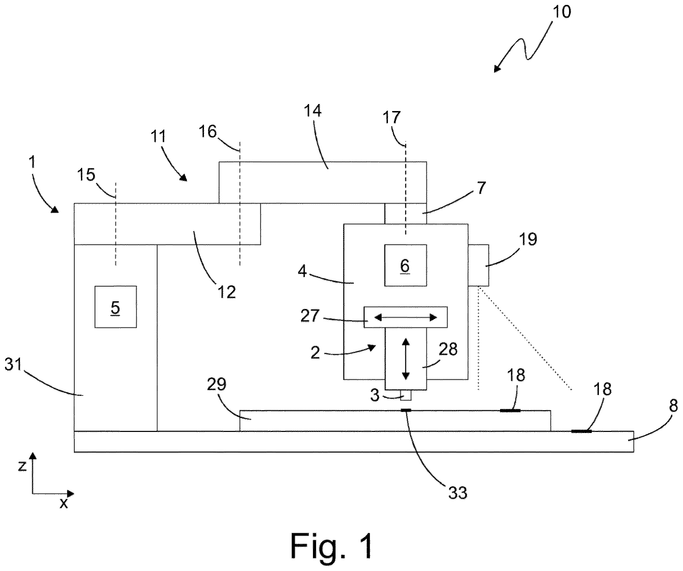

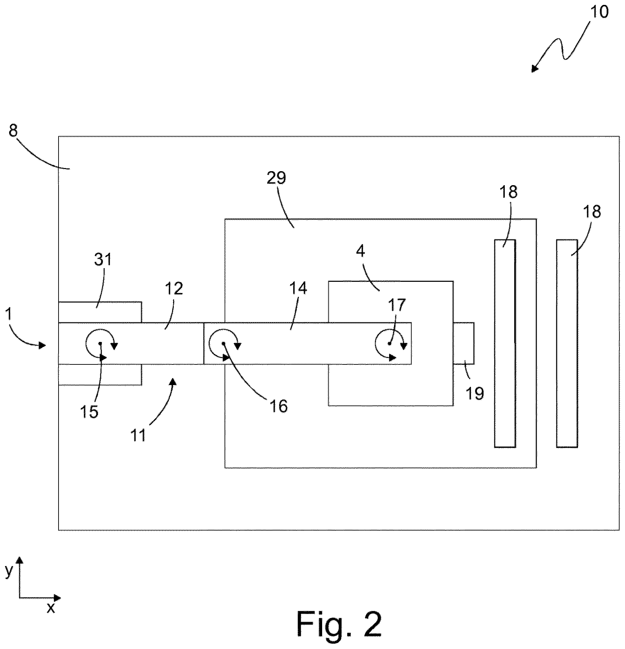

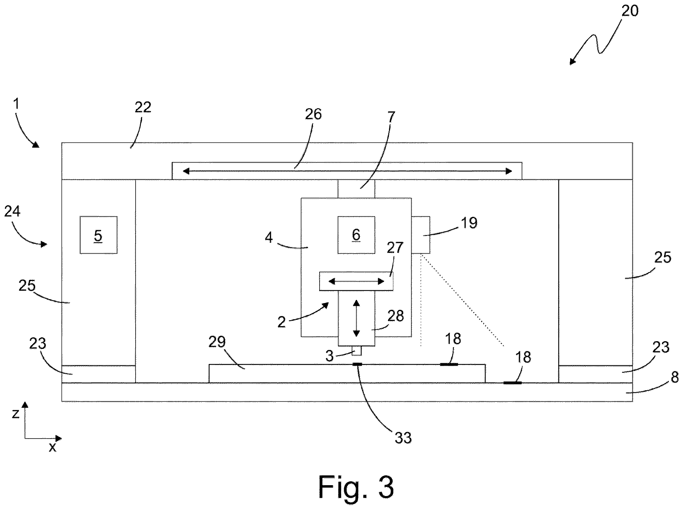

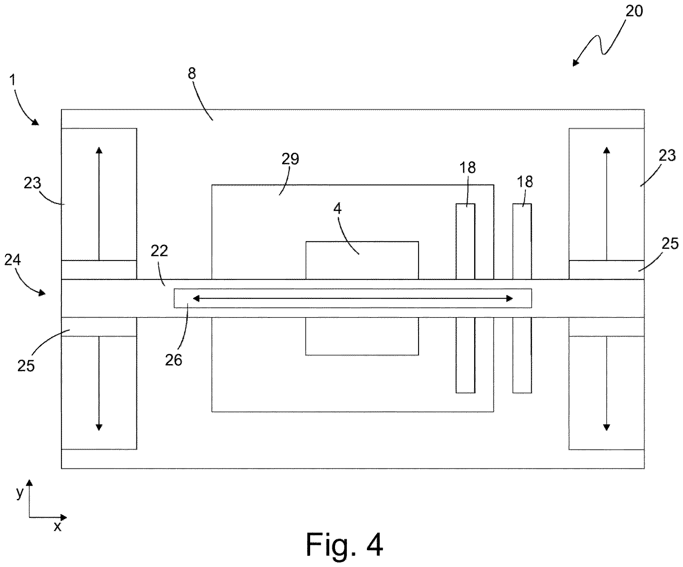

Die Figuren 1 und 2 zeigen eine Bearbeitungsvorrichtung 10 gemäß einer ersten Ausführungsform, während die Figuren 3 und 4 eine Bearbeitungsvorrichtung 20 gemäß einer zweiten Ausführungsform zeigen. Exemplarisch ist die erste Positioniereinrichtung 1 bei der ersten Ausführungsform als Scara-Roboter ausgebildet und bei der zweiten Ausführungsform als Portalroboter. Im Folgenden sollen zunächst diejenigen Merkmale diskutiert werden, die sowohl in der ersten Ausführungsform als auch in der zweiten Ausführungsform vorhanden sind. Der Einfachheit halber wird dabei primär auf die Bearbeitungsvorrichtung 10 eingegangen; die Erläuterungen gelten in Entsprechung auch für die Bearbeitungsvorrichtung 20.

Die Bearbeitungsvorrichtung 10 umfasst einen Bearbeitungskopf 4, der eine Bearbeitungseinheit 3 aufweist. Die Bearbeitungseinheit 3 ist als Werkzeug und/oder Auftrage-Einheit, insbesondere als Druckereinheit, ausgebildet.

Die Bearbeitungsvorrichtung 10 umfasst ferner eine erste Positioniereinrichtung 1 zur Bewegung des Bearbeitungskopfs 4, um die Bearbeitungseinheit 3 mit einer ersten Genauigkeit an einer vorgegebenen Bearbeitungsposition 33 zu positionieren.

Der Bearbeitungskopf 4 verfügt über eine zweite Positioniereinrichtung 2. Die Bearbeitungsvorrichtung 10 ist ausgebildet, unter Verwendung der zweiten Positioniereinrichtung 2 die Bearbeitungseinheit 3 mit einer zweiten Genauigkeit an der vorgegebenen Bearbeitungsposition 33 zu positionieren.

Die zweite Genauigkeit ist höher als die erste Genauigkeit, so dass durch die Positionierung mit der zweiten Positioniereinrichtung 2 die geringere Genauigkeit der ersten Positioniereinrichtung 1 kompensiert wird. Durch die Positionierung mit der zweiten Positioniereinrichtung 2 kann insbesondere der durch die Positionierung mit der ersten Positioniereinrichtung 1 verursachte Positionierfehler - also die Abweichung zwischen der Position der Bearbeitungseinheit 3 und der vorgegebenen Bearbeitungsposition 33 - korrigiert werden.

Auf diese Weise kann insgesamt eine hohe Genauigkeit erzielt werden, ohne dass dafür die den Bearbeitungskopf 4 positionierende - und damit in der Regel den größeren Positionierbereich aufweisende - erste Positioniereinrichtung 1 diese hohe Genauigkeit bereitstellen muss. Folglich kann als erste Positioniereinrichtung 1 insbesondere auch eine Positioniereinrichtung mit einem großen Positionierbereich verwendet werden, ohne dadurch die Positioniergenauigkeit der Bearbeitungsvorrichtung 10 insgesamt zu beeinträchtigen.

Im Folgenden werden exemplarische Details der Bearbeitungsvorrichtungen 10 und 20 sowie deren Komponenten erläutert. Auch hier wird der Einfachheit halber primär auf die Bearbeitungsvorrichtung 10 eingegangen, wobei die Erläuterungen in Entsprechung auch für die Bearbeitungsvorrichtung 20 gelten.

Die erste Positioniereinrichtung 1 dient dazu, den Bearbeitungskopf 4 relativ zu einem statischen Teil der Bearbeitungsvorrichtung 10, beispielsweise einer Werkstück-Auflage 8, und/oder relativ zu einem Werkstück 29 zu bewegen.

Die erste Positioniereinrichtung 1 verfügt exemplarisch über einen ersten Freiheitsgrad x und einen zweiten Freiheitgrad y zur Positionierung der Bearbeitungseinheit 3. Exemplarisch handelt es sich bei den Freiheitsgraden x, y der ersten Positioniereinrichtung 1 um lineare Freiheitsgrade, insbesondere um Koordinaten eines kartesischen Koordinatensystems. Vorzugsweise wird durch die beiden Freiheitsgrade x, y eine Positionierebene aufgespannt. Mit der ersten Positioniereinrichtung 1 lässt sich der Bearbeitungskopf 4 und/oder die Bearbeitungseinheit 3 insbesondere in der durch die Freiheitsgrade x, y aufgespannten Positionierebene positionieren.

Exemplarisch verfügt die Bearbeitungsvorrichtung 10 über die Werkstück-Auflage 8, auf der zweckmäßigerweise das Werkstück 29 angeordnet ist. Die Oberseite der Werkstück-Auflage 8 und/oder die Oberseite des Werkstücks 29 ist zweckmäßigerweise parallel zur Positionierebene ausgerichtet und liegt insbesondere in der Positionierebene bzw. stellt diese dar.

Die erste Positioniereinrichtung 1 kann ferner auch ausgebildet sein, den Bearbeitungskopf 4 in z-Richtung - also orthogonal zur x-Richtung und y-Richtung zu bewegen. Die erste Positioniereinrichtung 1 kann somit insbesondere ausgebildet sein, den Bearbeitungskopf 4 im dreidimensionalen Raum zu führen.

Die erste Positioniereinrichtung 1 verfügt zweckmäßigerweise über mehrere Maschinenachsen, insbesondere über eine oder mehrere lineare Maschinenachsen und/oder eine oder mehrere Rotationsachsen.

Die Bearbeitungsvorrichtung 10 ist insbesondere ausgebildet, unter Verwendung der ersten Positioniereinrichtung 1 die Bearbeitungseinheit 3 in einem Bereich zu positionieren, innerhalb dem eine Abweichung zur vorgegebenen Bearbeitungsposition 33 mithilfe der zweiten Positioniereinrichtung 2 korrigiert werden kann. Dieser Bereich, in dem eine Korrektur mit der zweiten Positioniereinrichtung möglich ist, kann auch als Bearbeitungsfenster bezeichnet werden. Zweckmäßigerweise ist die Bearbeitungsvorrichtung 10 ausgebildet, zu erkennen, wenn die Bearbeitungseinheit 3 das Bearbeitungsfenster verlässt und in diesem Fall die Bearbeitung durch die Bearbeitungseinheit 3 abzubrechen oder zu pausieren.

In den Figuren 1 und 2 ist die erste Positioniereinrichtung 1 exemplarisch als Scara-Roboter ausgebildet. Die erste Positioniereinrichtung 1 umfasst dementsprechend eine Roboterbasis 31, an der ein Roboterarm 11 vorgesehen ist. Exemplarisch ist an einem distalen Ende des Roboterarms 11 der Bearbeitungskopf 4 angebracht bzw. aufgehängt. Mittels des Roboterarms 11 lässt sich der Bearbeitungskopf 4 relativ zur Roboterbasis 31 bewegen.

Der Roboterarm 11 verfügt über ein erstes Roboterglied 12 und ein zweites Roboterglied 14. Zweckmäßigerweise kann der Roboterarm 11 auch über weitere Roboterglieder verfügen. Vorzugsweise ist der Bearbeitungskopf 4 an dem letzten Roboterglied - hier das zweite Roboterglied 14 - angebracht.

Das erste Roboterglied 12 ist über eine erste Maschinenachse 15 mit der Roboterbasis 31 verbunden und über diese erste Maschinenachse 15 relativ zur Roboterbasis 31 antreibbar. Das zweite Roboterglied 14 ist über eine zweite Maschinenachse 16 mit dem ersten Roboterglied 12 verbunden und über diese zweite Maschinenachse 16 relativ zum ersten Roboterglied 12 antreibbar. Der Bearbeitungskopf 4 ist über eine dritte Maschinenachse 17 mit dem zweiten Roboterglied 16 verbunden und über diese dritte Maschinenachse 17 relativ zum zweiten Roboterglied 16 antreibbar. Exemplarisch verfügt das zweite Roboterglied 16 über eine mechanische Schnittstelle 7, an der der Bearbeitungskopf 4 insbesondere abnehmbar angebracht ist. Zweckmäßigerweise erlauben die erste Maschinenachse 15 und die zweite Maschinenachse 16 rotatorische Bewegungen, während die dritte Maschinenachse 17 eine rotatorische und eine lineare Bewegung erlaubt. Insgesamt kann eine derart ausgebildete Positioniereinrichtung 1 eine Positionierung des Bearbeitungskopfs 4 in x-Richtung, y-Richtung und z-Richtung vornehmen.

Die Roboterbasis 31 ist mechanisch mit der Werkstück-Auflage 8 verbunden; exemplarisch ist die Roboterbasis 31 auf der Werkstück-Auflage 8 angeordnet und erstreckt sich in z-Richtung nach oben. Der Roboterarm 11 erstreckt sich im Wesentlichen horizontal von der Roboterbasis 31 und ragt über den x-y-Bereich der Werkstück-Auflage 8. Der Bearbeitungskopf 4 ist an dem Roboterarm 11 aufgehängt und erstreckt sich entsprechend in z-Richtung nach unten zu der Werkstück-Auflage 8 bzw. dem Werkstück 29.

In den Figuren 3 und 4 ist die erste Positioniereinrichtung 1 exemplarisch als Portalroboter ausgebildet. Die erste Positioniereinrichtung 1 umfasst dementsprechend einen relativ zur Werkstück-Auflage 8 bzw. relativ zum Werkstück 29 antreibbaren Portalschlitten 24. Exemplarisch ist der Portalschlitten 24 relativ zur Werkstück-Auflage 8 bzw. relativ zum Werkstück 29 in y-Richtung verfahrbar. Zum Antrieb des Portalschlittens 24 ist ein erster Linearantrieb 23 vorgesehen. Der Portalschlitten 24 verfügt über einen Portalarm 22, an dem der Bearbeitungskopf 4 insbesondere in x-Richtung bewegbar aufgehängt ist. Zum Antrieb des Bearbeitungskopfs 4, insbesondere in x-Richtung, relativ zum Portalarm 22 ist zweckmäßigerweise ein zweiter Linearantrieb 26 am Portalarm 22 vorgesehen. Am Portalarm 22 ist zweckmäßigerweise eine mechanische Schnittstelle 7 vorgesehen, an der der Bearbeitungskopf 4 insbesondere abnehmbar angebracht ist. Insgesamt kann die als Portalroboter ausgebildete Positioniereinrichtung 1 eine Positionierung des Bearbeitungskopfs 4 in x-Richtung und y-Richtung vornehmen. Optional kann die Positioniereinrichtung 1 darüber hinaus auch ausgebildet sein, den Bearbeitungskopf in z-Richtung zu positionieren.

Der Portalschlitten 24 verfügt in der gezeigten Ausgestaltung exemplarisch über zwei Vertikalelemente 25, die sich in z-Richtung von der Werkstück-Auflage 8 nach oben erstrecken. Der Portalarm 22 erstreckt sich von dem einen Vertikalelement 25 zu dem anderen Vertikalelement 25 und bildet zusammen mit den Vertikalelementen 25 den Portalschlitten 24.

Die erste Positioniereinrichtung 1 ist nicht auf die vorstehend diskutierten Ausgestaltungen als Scara-Roboter oder Portalroboter beschränkt. Stattdessen kann die erste Positioniereinrichtung 1 auch als eine andere Robotervorrichtung ausgestaltet sein. Zweckmäßigerweise ist die erste Positioniereinrichtung 1 als Gelenkarm-Roboter, Roboter mit linearen Achsen, Schienenfahrzeug, ein auf einem Werkstück fahrendes Gerät, und/oder ein Zug-System mit Seilen und/oder Ketten ausgebildet. Zweckmäßigerweise handelt es sich bei der Positioniereinrichtung 1 um einen Industrieroboter.

Die Bearbeitungsvorrichtung 10 ist exemplarisch ausgebildet, unter Verwendung der zweiten Positioniereinrichtung 2 die geringere Genauigkeit der ersten Positioniereinrichtung 1 in dem ersten Freiheitsgrad x und/oder dem zweiten Freiheitsgrad y zu kompensieren.

Zweckmäßigerweise verfügt die zweite Positioniereinrichtung 2 über den gleichen Freiheitsgrad x und/oder den gleichen Freiheitsgrad y wie die erste Positioniereinrichtung 1. Die zweite Positioniereinrichtung 2 kann insbesondere einen durch die geringere Genauigkeit der ersten Positionierungseinrichtung 1 verursachten Positionierungsfehler - also eine Abweichung der Bearbeitungseinheit 3 von der vorgegebenen Bearbeitungsposition 33 in x-Richtung und/oder y-Richtung korrigieren. Zweckmäßigerweise verfügt die zweite Positioniereinrichtung 2 über einen, mehrere oder sämtliche Freiheitsgrade der ersten Positioniereinrichtung 1.

Wie in den Figuren 1 und 3 exemplarisch gezeigt, verfügt die zweite Positioniereinrichtung 2 vorzugsweise über einen xy-Antrieb 27, beispielsweise eine Positionierungsplattform, mit dem die Bearbeitungseinheit 3 relativ zum Bearbeitungskopf 4 in x-Richtung und in y-Richtung positioniert werden kann. Optional verfügt die Positioniereinrichtung 2 ferner über einen z-Antrieb 28, mit dem die Bearbeitungseinheit 3 relativ zum Bearbeitungskopf 4 in z-Richtung positioniert werden kann. Die zweite Positioniereinrichtung 2 ist vorzugsweise im Bearbeitungskopf 4 integriert oder an diesem angebracht.

Der Bereich, insbesondere der x-y-Bereich, in dem die erste Positioniereinrichtung 1 die Bearbeitungseinheit 3 positionieren kann, soll auch als erster Positionierbereich bezeichnet werden. Der Bereich, insbesondere der x-y-Bereich, in dem die zweite Positioniereinrichtung 2 die Bearbeitungseinheit 3 positionieren kann, soll auch als zweiter Positionierbereich bezeichnet werden. Zweckmäßigerweise ist der erste Positionierbereich größer als der zweite Positionierbereich. Beispielsweise ist der erste Positionierbereich flächenmäßig wenigstens 2-mal, insbesondere wenigstens 10-mal, zweckmäßigerweise wenigstens 50-mal oder 100-mal so groß wie der zweite Positionierbereich. Vorzugsweise sind die erste Positioniereinrichtung 1 und die zweite Positioniereinrichtung 2 derart ausgebildet, dass sich der erste Positionierbereich und der zweite Positionierbereich stets überlappen.

Die zweite Positioniereinrichtung 2 ist insbesondere derart ausgebildet, dass die Positionierung der Bearbeitungseinheit 3 durch die zweite Positioniereinrichtung 2 mit einer höheren Genauigkeit und/oder Geschwindigkeit und/oder Steifigkeit als die Positionierung der Bearbeitungseinheit 3 mit der ersten Positioniereinrichtung 1 erfolgt.

Der Bearbeitungskopf 4 ist als manuell handhabbares Bearbeitungsgerät ausgebildet, so dass der Bearbeitungskopf 4 insbesondere in einem von der ersten Positioniereinrichtung 1 bzw. der Bearbeitungsvorrichtung 10 abgenommenen Zustand manuell an der vorgegebenen Bearbeitungsposition 33 positioniert werden kann. Der Bearbeitungskopf 4 ist ausgebildet, unter Verwendung der zweiten Positioniereinrichtung 2 die Bearbeitungseinheit 3 mit der zweiten Genauigkeit an der vorgegebenen Bearbeitungsposition 33 zu positionieren, so dass durch die Positionierung mit der zweiten Positioniereinrichtung 2 eine geringere Genauigkeit der manuellen Positionierung kompensiert wird. Zweckmäßigerweise kann der Bearbeitungskopf 4 also als eigenständiges Bearbeitungsgerät gehandhabt und zur Bearbeitung des Werkstücks 29 verwendet werden.

Die als Werkzeug ausgebildete Bearbeitungseinheit 3 umfasst zweckmäßigerweise eine Oberfräse, eine Säge, insbesondere eine Kreissäge und/oder Stichsäge, einen Laser, eine Stanzeinrichtung, ein Schneidwerkzeug, insbesondere einen Textil- und/oder Leder-Cutter, und/oder einen Wasserstrahler. Sofern die Bearbeitungseinheit 3 als Auftrage-Einheit ausgebildet ist, umfasst sie insbesondere eine Druckeinheit, zweckmäßigerweise eine 3D-Druckeinheit.

Exemplarisch verfügt die Bearbeitungsvorrichtung 10, insbesondere die erste Positioniereinrichtung 1 über eine mechanische Schnittstelle 7, an der der Bearbeitungskopf 4 und/oder die Bearbeitungseinheit 3 abnehmbar angebracht ist. Die mechanische Schnittstelle 7 kann insbesondere als Wechseleinrichtung ausgebildet sein, mit der ein Wechsel des Bearbeitungskopfs 4 und/oder der Bearbeitungseinheit 3 möglich ist.

Alternativ kann der Bearbeitungskopf 4 - und somit insbesondere auch die zweite Positioniereinrichtung 2 - fest mit der ersten Positioniereinrichtung 1 verbunden sein.

Die Bearbeitungsvorrichtung 10, insbesondere die erste Positioniereinrichtung 1 kann ferner auch über ein Hebemittel, insbesondere einen Greifer und/oder eine Vakuum-Ansaugeinrichtung, zum Handhaben des Bearbeitungskopfs 4, der Bearbeitungseinheit 3 und/oder eines Werkstücks 29 verfügen. Das Hebemittel kann zweckmäßigerweise die vorstehend erwähnte mechanische Schnittstelle 7 darstellen. Zweckmäßigerweise kann ein und dasselbe Hebemittel verwendet werden, um zum einen während der Bearbeitung den Bearbeitungskopf 4 an der ersten Positioniereinrichtung 1 zu befestigen und zum anderen vor und/oder nach der Bearbeitung das Werkstück 29 in oder aus dem Bearbeitungsbereich der Bearbeitungsvorrichtung 10 zu befördern. Zweckmäßigerweise ist die Bearbeitungsvorrichtung 10 ausgebildet, mithilfe des Hebemittels das Werkstück 29 auf der Werkstück-Auflage 8 zu positionieren.

Zweckmäßigerweise kann die Bearbeitungsvorrichtung 10 auch ein Wechselmagazin zur Aufnahme wenigstens eines weiteren Bearbeitungskopfs und/oder wenigstens einer weiteren Bearbeitungseinheit umfassen. Beispielsweise verfügt die Bearbeitungsvorrichtung 10 über wenigstens zwei verschiedene Bearbeitungsköpfe und/oder zwei verschiedene Bearbeitungseinheiten und ist ausgebildet, den an der ersten Positioniereinrichtung 1 angebrachten Bearbeitungskopf 4 und/oder die Bearbeitungseinheit 3 unter Verwendung des Wechselmagazins durch einen anderen Bearbeitungskopf und/oder eine andere Bearbeitungseinheit zu ersetzen.

Die Bearbeitungsvorrichtung 10 ist exemplarisch ausgebildet, die Position der Bearbeitungseinheit 3 relativ zu der vorgegebenen Bearbeitungsposition 33 zu bestimmen und die Positionierung der Bearbeitungseinheit 3 unter Verwendung der ersten Positioniereinrichtung und/oder der zweiten Positioniereinrichtung 2 basierend auf der bestimmten Position der Bearbeitungseinheit 3 durchzuführen. Beispielsweise ist die Bearbeitungsvorrichtung 10 ausgebildet, die Bearbeitungseinheit 3 und/oder das Werkstück 29 insbesondere mittels einer Video- und/oder Bildaufnahme, einem Laserscan und/oder mittels Ultraschall zu erkennen und anhand von einem Positionsbestimmungsalgorithmus die aktuelle Position der Bearbeitungseinheit 3 zu berechnen. Auf Basis der berechneten Position kann dann die weitere Positionierung bzw. Korrektur der Positionierung mit einer oder beiden der Positioniereinrichtungen 1, 2, insbesondere mit der zweiten Positioniereinrichtung 2 erfolgen.

Insbesondere ist die Bearbeitungsvorrichtung 10 ausgebildet, die Bearbeitungseinheit 3 und/oder das Werkstück 29 mittels einer Video- und/oder Bilderkennung/-verarbeitung und/oder durch Scannen des Werkstücks und/oder durch Auswertung von Ultraschall zu erkennen. Ferner kann die Bearbeitungsvorrichtung 10 ausgebildet sein, unter Verwendung anderer Lagesensoren und/oder Algorithmen auf Basis von Sensordaten (beispielsweise Video, Bilder, Laser, Ultraschall) die Position des Werkstücks 29 und/oder der Bearbeitungseinheit 3 zu ermitteln. Hierfür benötigte Sensoren können an den Positioniereinrichtungen 1, 2, dem Bearbeitungskopf 4 und/oder stationär angeordnet und/oder angebracht sein.

Die Bearbeitungsvorrichtung 10 verfügt exemplarisch über eine insbesondere am Bearbeitungskopf 4 angeordnete Sensoreinheit 19, beispielsweise über einen Bildsensor. Die Sensoreinheit 19 ist ausgebildet, ein an der Bearbeitungsvorrichtung 10 und/oder dem Werkstück 29 vorhandenes Referenzelement 18 zu erfassen. Das Referenzelement 18 ist beispielsweise eine optische Markierung, insbesondere ein Stück Band, vorzugsweise ein Stück Klebeband, mit einem aufgedruckten Muster.

Gemäß einer nicht gezeigten Ausgestaltung kann das Referenzelement 18 auch nur an der Bearbeitungsvorrichtung 1 vorgesehen sein, beispielsweise an der Werkstück-Auflage 8, und somit insbesondere nicht an dem Werkstück 29.

Als das Referenzelement 18 können ferner Merkmale des Werkstücks 29, beispielsweise Kanten, auf dem Werkstück 29 aufgebrachte Folien und/oder Marker, neben und/oder über dem Werkstück 29 an der Werkstück-Auflage 8 angebrachte Markierungen oder im Positionierbereich der ersten Positioniereinrichtung 1 oder der Bearbeitungsvorrichtung 10 positionierte Markierungen (z.B. mittels Stativen), insbesondere Kreismarker und/oder Lineale dienen. Zweckmäßigerweise kann ein neben und/oder auf dem Werkstück 29 positioniertes Lineal als das Referenzelement 18 dienen.

Alternativ oder zusätzlich zu der genannten Ausführung als Bildsensor kann die Sensoreinheit 19 auch andere Lagesensoren umfassen, insbesondere einen Beschleunigungssensor, einen Lasersensor und/oder einen Ultraschallsensor. Zur Positionsbestimmung mittels Laser und/oder Ultraschall kann an der Bearbeitungsvorrichtung 10, insbesondere an dem Bearbeitungskopf 4 eine Laser- und/oder Ultraschallquelle vorgesehen sein.

Die Bearbeitungsvorrichtung 10 ist zweckmäßigerweise ausgebildet, unter Verwendung der Sensoreinheit 19 die Position der Bearbeitungseinheit 3 relativ zu der vorgegebenen Bearbeitungsposition 33 zu bestimmen.

Zweckmäßigerweise verfügt die Bearbeitungsvorrichtung 10 über eine abgespeicherte Referenzkarte, in der die Position des Referenzelements 18 angegeben ist. Die Bearbeitungsvorrichtung 10 ist ausgebildet, unter Verwendung der Referenzkarte und des mit der Sensoreinheit 19 erfassten Referenzelements 18 die Position der Bearbeitungseinheit 3 zu bestimmen, insbesondere relativ zu der vorgegebenen Bearbeitungsposition 33. Beispielsweise handelt es sich bei der Sensoreinheit 19, wie vorstehend erwähnt, um einen Bildsensor, und bei dem Referenzelement 18 um eine optische Markierung. Die Bearbeitungsvorrichtung 10 ist insbesondere ausgebildet, unter Verwendung einer Bildverarbeitungssoftware, beispielsweise unter Verwendung eines Algorithmus für maschinelles Sehen, das Referenzelement 18 in einem von der Sensoreinheit 19 aufgenommenen Bild zu erkennen und basierend auf dem erkannten Referenzelement 18 eine relative Position der Sensoreinheit 19 bzw. der Bearbeitungseinheit 3 zu dem Referenzelement 18 zu berechnen. Da die Position des Referenzelements 18 in der Referenzkarte bekannt ist, kann so die Position der Bearbeitungseinheit 3 in der Referenzkarte ermittelt werden.

Auf diese Weise kann eine Abweichung der Position der Bearbeitungseinheit 3 von der vorgegebenen Bearbeitungsposition 33 ermittelt werden, anhand welcher wiederum die Positionierung mit der zweiten Positioniereinrichtung 2 erfolgen kann, um diese Abweichung zu kompensieren.

Vorzugsweise ist die Bearbeitungsvorrichtung 10 ausgebildet, im Rahmen eines Initialisierungsprozesses die Referenzkarte zu erstellen. Zu diesem Zweck ist die Bearbeitungsvorrichtung 10 beispielsweise ausgebildet, unter Verwendung der ersten Positioniereinrichtung 1 den Bearbeitungskopf 4 zu verfahren, um so mit der Sensoreinheit 19 den Bearbeitungsbereich der Bearbeitungsvorrichtung 10 zu erfassen, insbesondere Bilddaten davon aufzunehmen. Die Bearbeitungsvorrichtung 10 ist insbesondere ausgebildet, basierend auf dem erfassten Bearbeitungsbereich, insbesondere auf Basis der aufgenommenen Bilddaten, die Referenzkarte zu erstellen.

Zweckmäßigerweise wird die erläuterte Positionsbestimmung der Bearbeitungseinheit 3 nur bei der Positionierung mit der zweiten Positioniereinrichtung 2 - also insbesondere nicht bei der Positionierung mit der ersten Positioniereinrichtung 1 - verwendet.

Bei der Positionierung mit der ersten Positioniereinrichtung 1 kann es sich dementsprechend insbesondere um eine bloße Steuerung - also keine Regelung - handeln. Die Bearbeitungsvorrichtung 10 ist folglich insbesondere ausgebildet, die Positionierung mit der ersten Positioniereinrichtung 1 im Rahmen einer Steuerung durchzuführen. Dies kann beispielsweise bedeuten, dass bei der Positionierung mit der ersten Positioniereinrichtung 1 keine Rückkopplungsgröße über die Position des Bearbeitungskopfs 4 oder der Bearbeitungseinheit 3 verwendet wird.

Die Positionierung mit der zweiten Positioniereinrichtung 2 findet hingegen vorzugsweise als Regelung statt. Zweckmäßigerweise ist die Bearbeitungsvorrichtung 10 ausgebildet, die Positionierung mit der zweiten Positioniereinrichtung 2 im Rahmen einer Regelung durchzuführen. Insbesondere ist die Bearbeitungsvorrichtung 10 ausgebildet, die Position der Bearbeitungseinheit 3 auf die vorgegebene Bearbeitungsposition 33 zu regeln. Zu diesem Zweck kann die Bearbeitungsvorrichtung 10 bei der Positionierung mit der zweiten Positioniereinrichtung 2 eine Rückkopplungsgröße über die Position des Bearbeitungskopfs 4 oder der Bearbeitungseinheit 3 verwenden, beispielsweise die mit Hilfe der Sensoreinheit 19 erfasste Position der Bearbeitungseinheit 3.

Die Bearbeitungsvorrichtung 10 verfügt über eine oder mehrere Steuereinheiten, insbesondere Rechnereinheiten wie z.B. Mikrocontroller, um die vorstehend diskutierte Bestimmung der Position der Bearbeitungseinheit 3 und/oder eine Ansteuerung der Bearbeitungseinheit 3 und/oder eine Ansteuerung der Positioniereinrichtungen 1, 2 durchzuführen. Die Ansteuerung der Positioniereinrichtungen 1, 2 erfolgt insbesondere auf Basis von Bearbeitungsdaten, die beispielsweise als Design-/CAD-Daten bereitgestellt werden.

In einer nicht gezeigten Ausgestaltung verfügt die Bearbeitungsvorrichtung 10 über eine Steuereinheit, beispielsweise einen Mikrocontroller, die sowohl die erste Positioniereinrichtung 1 wie auch die zweite Positioniereinrichtung 2 ansteuert. Zweckmäßigerweise führt diese Steuereinheit auch eine Abstimmung zwischen den beiden Positioniereinrichtungen 1, 2 durch. Ferner kann diese Steuereinheit auch zur Ansteuerung bzw. Kommunikation mit der Bearbeitungseinheit 3 und/oder der Sensoreinheit 19 ausgebildet sein.

In den gezeigten Ausführungsbeispielen hingegen umfasst die Bearbeitungsvorrichtung 10 für jede Positioniereinrichtung 1, 2 eine eigene Steuereinheit. So verfügt die Bearbeitungsvorrichtung 10 exemplarisch über eine erste Steuereinheit 5 zur Ansteuerung der ersten Positioniereinrichtung 1 und eine zweite Steuereinheit 6 zur Ansteuerung der zweiten Positioniereinrichtung 2. Exemplarisch ist die zweite Steuereinheit 6 Teil des Bearbeitungskopfs 4.

Vorzugsweise steuert die erste Steuereinheit 5 nicht die zweite Positioniereinrichtung 2 an und die zweite Steuereinheit 6 steuert vorzugsweise nicht die erste Positioniereinrichtung 1 an. Jede Steuereinheit 5, 6 ist vorzugsweise nur für eine Positioniereinrichtung zuständig.

Vorzugsweise ist die erste Steuereinheit 5 und/oder die zweite Steuereinheit 6 ausgebildet, die Bearbeitungseinheit 3 anzusteuern um beispielsweise eine Bearbeitung des Werkstücks 29 zu bewirken.

Zweckmäßigerweise ist die erste Steuereinheit 5 und/oder die zweite Steuereinheit 6 über drahtgebundene und/oder drahtlose Datenverbindungen mit der ersten Positioniereinrichtung 1, der zweiten Positioniereinrichtung 2, der Bearbeitungseinheit 3 und/oder der Sensoreinheit 19 verbunden.

Bearbeitungsdaten, aus denen insbesondere die erwähnte Bearbeitungsposition 33 hervorgeht, werden zweckmäßigerweise in beiden Steuereinheiten 5, 6 bereitgestellt, so dass jede der Steuereinheiten 5, 6 die Ansteuerung der jeweils zugeordneten Positioniereinrichtung 1, 2 auf Basis der Bearbeitungsdaten durchführen kann.

Die Steuereinheiten 5, 6 können unterschiedlich ausgebildet sein, so dass sie die Bearbeitungsdaten in unterschiedlichen Datenformaten akzeptieren und/oder benötigen. Zweckmäßigerweise ist die Bearbeitungsvorrichtung 10 ausgebildet, der ersten Steuereinheit 5 Bearbeitungsdaten, die die Bearbeitungsposition 33 definieren, in einem ersten Datenformat bereitzustellen und der zweiten Steuereinheit 6 die Bearbeitungsdaten in einem zweiten Datenformat bereitzustellen. Das zweite Datenformat unterscheidet sich zweckmäßigerweise von dem ersten Datenformat. Beispielsweise ist das erste Datenformat ein G-Code-Datenformat und das zweite Datenformat ein Vektor-Datenformat, insbesondere SVG.

Exemplarisch ist die erste Steuereinheit 5 ausgebildet, der zweiten Steuereinheit 6 die Bearbeitungsdaten in dem zweiten Datenformat bereitzustellen und/oder die zweite Steuereinheit 6 ist ausgebildet, die Bearbeitungsdaten der ersten Steuereinheit 5 in dem ersten Datenformat bereitzustellen. Beispielsweise kann eine oder beide der Steuereinheiten 5, 6 ausgebildet sein, die Bearbeitungsdaten in einem der Datenformate zu erstellen und/oder zu empfangen, die Bearbeitungsdaten in dem anderen der Datenformate zu erstellen, empfangen und/oder in das andere Datenformat zu konvertieren und die Bearbeitungsdaten in dem anderen Datenformat der anderen Steuereinheit 5, 6 bereitzustellen.

Die Bearbeitungsvorrichtung 10, insbesondere der Bearbeitungskopf 4, kann beispielsweise über eine Eingabevorrichtung verfügen, mit der ein Benutzer manuell Bearbeitungsdaten, beispielsweise in der Form einer oder mehrerer Bearbeitungspositionen, in die zweite Steuereinheit 6 eingeben kann. Die Bearbeitungsdaten werden dann optional von der zweiten Steuereinheit 6 in das von der ersten Steuereinheit 5 benötigte Format konvertiert und der ersten Steuereinheit 5 bereitgestellt.

Ferner ist es möglich, dass die erste Steuereinheit 5 und die zweite Steuereinheit 6 über Bearbeitungsdaten mit unterschiedlichem Dateninhalt verfügen. Beispielsweise kann die erste Steuereinheit 5 über ungenauere Bearbeitungsdaten als die zweite Steuereinheit 6 verfügen. Insbesondere kann die erste Steuereinheit 5 ausgebildet sein, die Ansteuerung der ersten Positioniereinrichtung 1 auf Basis von Bearbeitungsdaten durchzuführen, die eine geringere räumliche Auflösung haben als die Bearbeitungsdaten, mit der die zweite Steuereinheit 6 die zweite Positioniereinrichtung 2 ansteuert.

Es ist ferner auch möglich, dass die Steuereinheiten 5, 6 die Bearbeitungsdaten in dem gleichen Datenformat und/oder mit dem gleichen Dateninhalt akzeptieren/benötigen.

Sofern zwei Steuereinheiten 5, 6 vorhanden sind, die jeweils eine der Positioniereinrichtungen 5, 6 ansteuern, kann es von Vorteil sein, einen Positionsabgleich zwischen den beiden Steuereinheiten 5, 6 durchzuführen.

Zweckmäßigerweise ist die Bearbeitungsvorrichtung 10 ausgebildet, der ersten Steuereinheit 5 und/oder der zweiten Steuereinheit 6 eine Positionsinformation bereitzustellen, um einen Positionsabgleich zwischen der ersten Steuereinheit 5 und der zweiten Steuereinheit 6 durchzuführen. Zweckmäßigerweise ist eine oder beider der Steuereinheiten 5, 6 ausgebildet, die Positionsinformation zu erstellen und der anderen Steuereinheit 5, 6 bereitzustellen. Die Positionsinformation kann insbesondere anzeigen, dass eine der Positioniereinrichtungen 1, 2 sich in einer bestimmten Stellung befindet, beispielsweise, dass sich der Bearbeitungskopf 4 und/oder die Bearbeitungseinheit 3 an einer Nullposition und/oder einer Grenze eines oder beider der Positionierbereiche befinden.

Alternativ und/oder zusätzlich zu dem Positionsabgleich kann auch ein Zeitabgleich, beispielsweise zum Zwecke der zeitlichen Synchronisation, zwischen den beiden Steuereinheiten 5, 6 erfolgen. Vorzugsweise ist die Bearbeitungsvorrichtung 10 ausgebildet, der ersten Steuereinheit 5 und/oder der zweiten Steuereinheit 6 eine Zeitinformation bereitzustellen, um einen Zeitabgleich zwischen der ersten Steuereinheit 5 und der zweiten Steuereinheit 6 durchzuführen. Zweckmäßigerweise ist eine oder beider der Steuereinheiten 5, 6 ausgebildet, die Zeitinformation zu erstellen und der anderen Steuereinheit 5, 6 bereitzustellen.

## Patentansprüche

1. Bearbeitungsvorrichtung (10; 20) mit einem Bearbeitungskopf (4), der eine als Werkzeug und/oder Auftrage-Einheit, insbesondere Druckereinheit, ausgebildete Bearbeitungseinheit (3) umfasst, und einer ersten Positioniereinrichtung (1) zur Bewegung des Bearbeitungskopfs (4), um die Bearbeitungseinheit (3) mit einer ersten Genauigkeit an einer vorgegebenen Bearbeitungsposition (33) zu positionieren, wobei der Bearbeitungskopf (4) über eine zweite Positioniereinrichtung (2) verfügt und die Bearbeitungsvorrichtung (10; 20) ausgebildet ist, unter Verwendung der zweiten Positioniereinrichtung (2) die Bearbeitungseinheit (3) mit einer zweiten Genauigkeit an der vorgegebenen Bearbeitungsposition (33) zu positionieren, wobei die zweite Genauigkeit höher ist als die erste Genauigkeit, so dass durch die Positionierung mit der zweiten Positioniereinrichtung (2) die geringere Genauigkeit der ersten Positioniereinrichtung (2) kompensiert wird, **dadurch gekennzeichnet, dass** der Bearbeitungskopf (4) als manuell handhabbares Bearbeitungsgerät ausgebildet ist, so dass der Bearbeitungskopf (4) in einem von der ersten Positioniereinrichtung (1) abgenommenen Zustand manuell an der vorgegebenen Bearbeitungsposition (33) positioniert werden kann und der Bearbeitungskopf (4) ausgebildet ist, unter Verwendung der zweiten Positioniereinrichtung (2) die Bearbeitungseinheit (3) mit der zweiten Genauigkeit an der vorgegebenen Bearbeitungsposition (33) zu positionieren, so dass durch die Positionierung mit der zweiten Positioniereinrichtung (2) eine geringere Genauigkeit der manuellen Positionierung kompensiert wird.

2. Bearbeitungsvorrichtung (10; 20) nach Anspruch 1, **dadurch gekennzeichnet, dass** die Bearbeitungsvorrichtung (10; 20) über eine erste Steuereinheit (5) zur Ansteuerung der ersten Positioniereinrichtung (1) und eine zweite Steuereinheit (6) zur Ansteuerung der zweiten Positioniereinrichtung (2) verfügt.

3. Bearbeitungsvorrichtung (10; 20) nach Anspruch 2, **dadurch gekennzeichnet, dass** die Bearbeitungsvorrichtung (10; 20) ausgebildet ist, der ersten Steuereinheit (5) die Bearbeitungsposition (33) definierende Bearbeitungsdaten in einem ersten Datenformat bereitzustellen und der zweiten Steuereinheit (6) die Bearbeitungsdaten in einem zweiten Datenformat bereitzustellen.

4. Bearbeitungsvorrichtung (10; 20) nach Anspruch 2 oder 3, **dadurch gekennzeichnet, dass** die Bearbeitungsvorrichtung (10; 20) ausgebildet ist, der ersten Steuereinheit (5) und/oder der zweiten Steuereinheit (6) eine Positionsinformation bereitzustellen, um einen Positionsabgleich zwischen der ersten Steuereinheit (5) und der zweiten Steuereinheit (6) durchzuführen.

5. Bearbeitungsvorrichtung (10; 20) nach einem der Ansprüche 2 bis 4, **dadurch gekennzeichnet, dass** die Bearbeitungsvorrichtung (10; 20) ausgebildet ist, der ersten Steuereinheit (5) und/oder der zweiten Steuereinheit (6) eine Zeitinformation bereitzustellen, um einen Zeitabgleich zwischen der ersten Steuereinheit (5) und der zweiten Steuereinheit (6) durchzuführen.

6. Bearbeitungsvorrichtung (10; 20) nach einem der voranstehenden Ansprüche, **dadurch gekennzeichnet, dass** die Bearbeitungsvorrichtung (10) ausgebildet ist, die Positionierung mit der ersten Positioniereinrichtung (1) im Rahmen einer Steuerung durchzuführen und die Positionierung mit der zweiten Positioniereinrichtung im Rahmen einer Regelung durchzuführen.

7. Bearbeitungsvorrichtung (10; 20) nach einem voranstehenden Anspruch, **dadurch gekennzeichnet, dass** die erste Positioniereinrichtung (1) über einen ersten Freiheitsgrad (x) und/oder einen zweiten Freiheitgrad (y) zur Positionierung der Bearbeitungseinheit (3) verfügt, und die Bearbeitungsvorrichtung (10; 20) ausgebildet ist, unter Verwendung der zweiten Positioniereinrichtung (2) die geringere Genauigkeit der ersten Positioniereinrichtung (1) in dem ersten Freiheitsgrad (x) und/oder dem zweiten Freiheitsgrad (y) zu kompensieren.

8. Bearbeitungsvorrichtung (10; 20) nach einem voranstehenden Anspruch, **dadurch gekennzeichnet, dass** die Bearbeitungsvorrichtung (10) ausgebildet ist, die Position der Bearbeitungseinheit (3) relativ zu der vorgegebenen Bearbeitungsposition (33) zu bestimmen und die Positionierung der Bearbeitungseinheit (3) unter Verwendung der ersten Positioniereinrichtung und/oder der zweiten Positioniereinrichtung (2) basierend auf der bestimmten Position der Bearbeitungseinheit (3) durchzuführen.

9. Bearbeitungsvorrichtung (10; 20) nach Anspruch 8, **dadurch gekennzeichnet, dass** die Bearbeitungsvorrichtung (10) über eine insbesondere am Bearbeitungskopf (4) angeordnete Sensoreinheit (19), insbesondere einen Bildsensor, zur Erfassung eines an der Bearbeitungsvorrichtung (10; 20) und/oder einem Werkstück (29) vorhandenen Referenzelements (18), insbesondere einer optischen Markierung, verfügt und ausgebildet ist, unter Verwendung der Sensoreinheit (19) die Position der Bearbeitungseinheit (3) relativ zu der vorgegebenen Bearbeitungsposition (33) zu bestimmen.

10. Bearbeitungsvorrichtung (10; 20) nach einem der voranstehenden Ansprüche, **dadurch gekennzeichnet, dass** die erste Positioniereinrichtung (1) eine Robotervorrichtung, einen Industrieroboter, einen Portalroboter, einen Scara-Roboter, einen Gelenkarm-Roboter, einen Roboter mit linearen Achsen, ein Schienenfahrzeug, ein auf einem Werkstück fahrendes Gerät, und/oder ein Zug-System mit Seilen und/oder Ketten umfasst.

11. Bearbeitungsvorrichtung (10; 20) nach einem der voranstehenden Ansprüche, **dadurch gekennzeichnet, dass** das Werkzeug eine Oberfräse, eine Säge, insbesondere eine Kreissäge und/oder Stichsäge, einen Laser, eine Stanzeinrichtung, ein Schneidwerkzeug, insbesondere einen Textil- und/oder Leder-Cutter, und/oder einen Wasserstrahler umfasst und/oder die Auftrage-Einheit eine Druckeinheit, zweckmäßigerweise eine 3D-Druckeinheit, umfasst.

12. Bearbeitungsvorrichtung (10; 20) nach einem der voranstehenden Ansprüche, **dadurch gekennzeichnet, dass** die Bearbeitungsvorrichtung (10; 20), insbesondere die erste Positioniereinrichtung (1) über eine mechanische Schnittstelle (7) verfügt, an der der Bearbeitungskopf (4) und/oder die Bearbeitungseinheit (3) abnehmbar angebracht ist.

13. Bearbeitungsvorrichtung (10; 20) nach einem der voranstehenden Ansprüche, **dadurch gekennzeichnet, dass** die Bearbeitungsvorrichtung (10; 20), insbesondere die erste Positioniereinrichtung (1) über ein Hebemittel, insbesondere einen Greifer und/oder eine Vakuum-Ansaugeinrichtung, zum Handhaben des Bearbeitungskopfs (4), der Bearbeitungseinheit (3) und/oder eines Werkstücks (29) verfügt.

14. Bearbeitungsvorrichtung (10; 20) nach einem der voranstehenden Ansprüche, **dadurch gekennzeichnet, dass** die Bearbeitungsvorrichtung (10; 20) über ein Wechselmagazin zur Aufnahme wenigstens eines weiteren Bearbeitungskopfs und/oder wenigstens einer weiteren Bearbeitungseinheit verfügt.

## Claims

1. Processing device (10; 20) with a processing head (4), the processing head (4) comprising a processing unit (3) designed as a tool and/or applicator unit, in particular a printer unit, and a first positioning device (1) for moving the processing head (4) in order to position the processing unit (3) with a first accuracy at a specified processing position (33), wherein the processing head (4) has a second positioning device (2) and the processing device (10; 20) is configured to position the processing unit (3) at the specified processing position (33) with a second accuracy using the second positioning device (2), the second accuracy being higher than the first accuracy, so that the lower accuracy of the first positioning device (2) is compensated for by the positioning with the second positioning device (2), **characterized in that** the processing head (4) is designed as a hand-guided processing device, so that the processing head (4) can be positioned manually at the specified processing position (33), in a state in which the processing head (4) is removed from the first positioning device (1), and the processing head (4) is configured to position the processing unit (3) with the second accuracy at the specified processing position (33) using the second positioning device (2), so that a lower accuracy of the manual positioning is compensated by the positioning with the second positioning device (2).

2. Processing device (10; 20) according to claim 1, **characterised in that** the processing device (10; 20) has a first control unit (5) for controlling the first positioning device (1) and a second control unit (6) for controlling the second positioning device (2).

3. Processing device (10; 20) according to claim 2, **characterized in that** the processing device (10; 20) is configured to provide the first control unit (5) with processing data defining the processing position (33) in a first data format and to provide the second control unit (6) with the processing data in a second data format.

4. Processing device (10; 20) according to claim 2 or 3, **characterized in that** the processing device (10; 20) is configured to provide position information to the first control unit (5) and/or the second control unit (6) in order to perform a position calibration between the first control unit (5) and the second control unit (6).

5. Processing device (10; 20) according to one of claims 2 to 4, **characterized in that** the processing device (10; 20) is configured to provide the first control unit (5) and/or the second control unit (6) with time information in order to carry out a time alignment between the first control unit (5) and the second control unit (6).

6. Processing device (10; 20) according to one of the above claims, **characterized in that** the processing device (10) is configured to carry out the positioning with the first positioning device (1) within an open-loop control and to carry out the positioning with the second positioning device within a closed-loop control.

7. Processing device (10; 20) according to a preceding claim, **characterized in that** the first positioning device (1) has a first degree of freedom (x) and/or a second degree of freedom (y) for positioning the processing unit (3), and the processing device (10; 20) is adapted to compensate, using the second positioning device (2), for the lower accuracy of the first positioning device (1) in the first degree of freedom (x) and/or the second degree of freedom (y).

8. Processing device (10; 20) according to a preceding claim, **characterized in that** the processing device (10) is adapted to determine the position of the processing unit (3) relative to the specified processing position (33) and to perform the positioning of the processing unit (3) using the first positioning device and/or the second positioning device (2) based on the determined position of the processing unit (3).

9. Processing device (10; 20) according to claim 8, **characterized in that** the processing device (10) has a sensor unit (19), in particular an image sensor, arranged in particular on the processing head (4), for detecting a reference element (18), in particular an optical marking, present on the processing device (10; 20) and/or a workpiece (29), and is configured to determine the position of the processing unit (3) relative to the specified processing position (33) using the sensor unit (19).

10. Processing device (10; 20) according to one of the above claims, **characterized in that** the first positioning device (1) comprises a robot device, an industrial robot, a gantry robot, a SCARA robot, an articulated arm robot, a robot with linear axes, a rail vehicle, an apparatus travelling on a workpiece, and/or a traction system with ropes and/or chains.

11. Processing device (10; 20) according to one of the above claims, **characterized in that** the tool comprises a router, a saw, in particular a circular saw and/or jigsaw, a laser, a punching device, a cutting tool, in particular a textile and/or leather cutter, and/or a water jet and/or the applicator unit comprises a printing unit, expediently a 3D printing unit.

12. Processing device (10; 20) according to one of the above claims, **characterised in that** the processing device (10; 20), in particular the first positioning device (1), has a mechanical interface (7) to which the processing head (4) and/or the processing unit (3) is detachably attached.

13. Processing device (10; 20) according to one of the above claims, **characterised in that** the processing device (10; 20), in particular the first positioning device (1), has a lifting means, in particular a gripper and/or a vacuum suction device, for handling the processing head (4), the processing unit (3) and/or a workpiece (29).

14. Processing device (10; 20) according to one of the above claims, **characterised in that** the processing device (10; 20) has a changing magazine for receiving at least one further processing head and/or at least one further processing unit.

## Revendications

1. Dispositif d'usinage (10 ; 20) avec une tête d'usinage (4), qui comprend une unité d'usinage (3) réalisée en tant qu'outil et/ou qu'unité d'application, en particulier en tant qu'unité d'impression, et un premier système de positionnement (1) destiné à déplacer la tête d'usinage (4) pour positionner l'unité d'usinage (3) avec une première précision sur une position d'usinage (33) prédéfinie, dans lequel la tête d'usinage (4) dispose d'un deuxième système de positionnement (2) et le dispositif d'usinage (10 ; 20) est réalisé pour positionner, en utilisant le deuxième système de positionnement (2), l'unité d'usinage (3) avec une deuxième précision sur la position d'usinage (33) prédéfinie, dans lequel la deuxième précision est plus élevée que la première précision de telle sorte que la faible précision du premier système de positionnement (2) est compensée par le positionnement avec le deuxième système de positionnement (2), **caractérisé en ce que** la tête d'usinage (4) est réalisée en tant qu'appareil d'usinage pouvant être manipulé manuellement de telle sorte que la tête d'usinage (4) peut être positionnée manuellement sur la position d'usinage (33) prédéfinie dans un état retiré du premier système de positionnement (1) et la tête de positionnement (4) est réalisée pour positionner, en utilisant le deuxième système de positionnement (2), l'unité d'usinage (3) avec la deuxième précision sur la position d'usinage (33) prédéfinie de telle sorte qu'une faible précision du positionnement manuel est compensée par le positionnement avec le deuxième système de positionnement (2).

2. Dispositif d'usinage (10 ; 20) selon la revendication 1,
**caractérisé en ce que** le dispositif d'usinage (10 ; 20) dispose d'une première unité de commande (5) destinée à piloter le premier système de positionnement (1) et d'une deuxième unité de commande (6) destinée à piloter le deuxième système de positionnement (2).

3. Dispositif d'usinage (10 ; 20) selon la revendication 2,
**caractérisé en ce que** le dispositif d'usinage (10 ; 20) est réalisé pour fournir à la première unité de commande (5) des données d'usinage définissant la position d'usinage (33) dans un premier format de données et pour fournir à la deuxième unité de commande (6) les données d'usinage dans un deuxième format de données.

4. Dispositif d'usinage (10 ; 20) selon la revendication 2 ou 3, **caractérisé en ce que** le dispositif d'usinage (10 ; 20) est réalisé pour fournir à la première unité de commande (5) et/ou à la deuxième unité de commande (6) une information de position pour mettre en oeuvre une comparaison de positions entre la première unité de commande (5) et la deuxième unité de commande (6).

5. Dispositif d'usinage (10 ; 20) selon l'une quelconque des revendications 2 à 4, **caractérisé en ce que** le dispositif d'usinage (10 ; 20) est réalisé pour fournir à la première unité de commande (5) et/ou à la deuxième unité de commande (6) une information de temps pour mettre en oeuvre une comparaison temporelle entre la première unité de commande (5) et la deuxième unité de commande (6).

6. Dispositif d'usinage (10 ; 20) selon l'une quelconque des revendications précédentes, **caractérisé en ce que** le dispositif d'usinage (10) est réalisé pour mettre en oeuvre le positionnement avec le premier système de positionnement (1) dans le cadre d'une commande et pour mettre en oeuvre le positionnement avec le deuxième système de positionnement dans le cadre d'une régulation.

7. Dispositif d'usinage (10 ; 20) selon l'une quelconque des revendications précédentes, **caractérisé en ce que** le premier système de positionnement (1) dispose d'un premier degré de liberté (x) et/ou d'un deuxième degré de liberté (y) pour positionner l'unité d'usinage (3), et le dispositif d'usinage (10 ; 20) est réalisé pour compenser, en utilisant le deuxième système de positionnement (2), la faible précision du premier système de positionnement (1) dans le premier degré de liberté (x) et/ou le deuxième degré de liberté (y).

8. Dispositif d'usinage (10 ; 20) selon la revendication précédente, **caractérisé en ce que** le dispositif d'usinage (10) est réalisé pour définir la position de l'unité d'usinage (3) par rapport à la position d'usinage (33) prédéfinie et pour mettre en oeuvre le positionnement de l'unité d'usinage (3) en utilisant le premier système de positionnement et/ou le deuxième système de positionnement (2) sur la base de la position définie de l'unité d'usinage (3).

9. Dispositif d'usinage (10 ; 20) selon la revendication 8,
**caractérisé en ce que** le dispositif d'usinage (10) dispose d'une unité de capteur (19) disposée en particulier sur la tête d'usinage (4), en particulier d'un capteur d'image, pour détecter un élément de référence (18) présent sur le dispositif d'usinage (10 ; 20) et/ou sur une pièce (29), en particulier d'un marquage optique et est réalisé pour définir la position de l'unité d'usinage (3) par rapport à la position d'usinage (33) prédéfinie en utilisant l'unité de capteur (19).

10. Dispositif d'usinage (10 ; 20) selon l'une quelconque des revendications précédentes, **caractérisé en ce que** le premier système de positionnement (1) comprend un dispositif robotisé, un robot industriel, un robot sur portique, un robot de type SCARA, un robot à bras articulé, un robot avec des axes linéaires, un véhicule sur rails, un appareil se déplaçant sur une pièce et/ou un système de traction avec des câbles et/ou des chaînes.

11. Dispositif d'usinage (10 ; 20) selon l'une quelconque des revendications précédentes, **caractérisé en ce que** l'outil comprend une fraise supérieure, une scie, en particulier une scie circulaire et/ou une scie sauteuse, un laser, un système d'estampage, un outil de découpe, en particulier un cutter pour textile et/ou cuir, et/ou un système à jets d'eau et/ou l'unité d'application comprend une unité d'impression, de manière opportune une unité d'impression 3D.

12. Dispositif d'usinage (10 ; 20) selon l'une quelconque des revendications précédentes, **caractérisé en ce que** le dispositif d'usinage (10 ; 20), en particulier le premier système de positionnement (1), dispose d'une interface mécanique (7), sur laquelle la tête d'usinage (4) et/ou l'unité d'usinage (3) peuvent être installées de manière à pouvoir être retirées.

13. Dispositif d'usinage (10 ; 20) selon l'une quelconque des revendications précédentes, **caractérisé en ce que** le dispositif d'usinage (10 ; 20), en particulier le premier système de positionnement (1), dispose d'un moyen de levage, en particulier d'un grappin et/ou d'un système d'aspiration sous vide, destiné à manipuler la tête d'usinage (4), l'unité d'usinage (3) et/ou une pièce (29).

14. Dispositif d'usinage (10 ; 20) selon l'une quelconque des revendications précédentes, **caractérisé en ce que** le dispositif d'usinage (10 ; 20) dispose d'un magasin de remplacement destiné à recevoir au moins une autre tête d'usinage et/ou au moins une autre unité d'usinage.
